# EUROPEAN PATENT SPECIFICATION

(11) **EP 2 767 103 B1**
(45) Date of publication and mention of the grant of the patent: **28.06.2023**
(21) Application number: 12840000.9
(22) Date of filing: 12.10.2012
(51) Int. Cl.: H04L 5/00, H04W 72/04

(54) **SYSTEM AND METHOD FOR DATA CHANNEL TRANSMISSION AND RECEPTION**
SYSTEM UND VERFAHREN FÜR DATENKANALÜBERTRAGUNG UND -EMPFANG
SYSTÈME ET PROCÉDÉ DE TRANSMISSION ET DE RÉCEPTION DE CANAL DE DONNÉES

(30) Priority: 13.10.2011 US 201161546878 P
(43) Date of publication of application: 20.08.2014
(73) Proprietor: Huawei Technologies Co., Ltd., Longgang District Shenzhen, Guangdong 518129 (CN)
(72) Inventor: SARTORI, Philippe, Algonquin, Illinois 60102 (US); SOONG, Anthony C.K., Plano, Texas 75025 (US); BERGGREN, Frederik, SE-194 57 Upplands Vaesby (SE)
(74) Representative: Körber, Martin Hans
(86) International application number: PCT/US2012/060080
(87) International publication number: WO 2013/056138

(56) References cited:
- WO-A1-2010/129605
- WO-A1-2011/085195
- WO-A2-2011/025195
- US-A1- 2009 175 159
- US-A1- 2009 252 075
- US-A1- 2010 232 546
- US-A1- 2011 044 261
- US-A1- 2011 165 906
- US-A1- 2011 170 496
- LG ELECTRONICS INC: "PDSCH Starting Symbol Indication for Cross-Carrier Scheduling", 3GPP DRAFT; R1-102707-PCFICH_CA_LG_RAN1-61_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 4 May 2010 (2010-05-04), XP050419910, [retrieved on 2010-05-04]
- ALCATEL-LUCENT SHANGHAI BELL AND ALCATEL-LUCENT: "Backhaul Performance Requirement for Relay", 3GPP DRAFT; R4-110354, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Austin; 20110117, 11 January 2011 (2011-01-11), XP050475071, [retrieved on 2011-01-11]
- NTT DOCOMO: "On RRC Signaling of PDSCH Starting Position", 3GPP DRAFT; R1-104011 PCFICH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449340, [retrieved on 2010-06-22]

## Description

### TECHNICAL FIELD

The present disclosure relates generally to digital communications, and more particularly to a system and method for data channel transmission and reception.

### BACKGROUND

As the demand for data increases, communications systems should increase the efficiency in which the spectrum is utilized. Within the context of industrial and technical standards, member companies are looking at ways to improve performance. As an example, in the Third Generation Partnership Project (3GPP) Long Term Evolution (LTE) Release 10 (Rel-10), at most 13 symbols per subframe can be used for data transmission. However, for 3GPP LTE Release 11 (Rel-11), a new control channel referred to as an enhanced physical downlink control channel (ePDCCH) is being specified. For user equipment (UE), also commonly referred to as users, subscribers, terminals, mobile stations, mobiles, and the like, the use of the ePDCCH for assignments may permit more symbols to be used for data transmission than when compared to UEs receiving assignments with a physical downlink control channel (PDCCH).

WO2011/085195A1 discloses a method managing control channel interference. The method includes a first access node transmitting an E-PDCCH, wherein a DM-RS for the E-PDCCH supports channel estimation of the E-PDCCH.

WO2010/129605A1 discloses systems and methodologies facilitate defining a new control region over resources allocated for communicating general non-control data in a legacy network specification.

WO 2011/025195 A2 refers to a method for a base station to transmit a downlink signal in a wireless communication system, the method comprising: allocating a resource to a downlink signal; and transmitting the downlink signal using the allocated resource. In the downlink signal transmission method and apparatus thereof, a resource for transmitting a Physical Downlink Shared Channel (PDSCH) among the downlink signals is allocated from a specific OFDM symbol that is fixed within a subframe.

### SUMMARY OF THE DISCLOSURE

The above mentioned problem is solved by the subject matter of the independent claims. Further implementation forms are provided in the dependent claims.

One advantage of an embodiment is that additional symbols per subframe may be used for data transmission, thereby increasing data rate, spectrum utilization, and efficiency.

A further advantage of an embodiment is that very little to no additional overhead is needed, thereby signaling overhead does not negatively impact data rate, spectrum utilization, and efficiency.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates an example communications system according to example embodiments described herein;
Figure 2 illustrates an example structure of a subframe of a 3GPP LTE compliant communications system according to example embodiments described herein;
Figure 3 illustrates an example structure of a first subframe of a 3GPP LTE compliant communications system highlighting an ePDCCH according to example embodiments described herein;
Figure 4 illustrates an example structure of a second subframe of a 3GPP LTE compliant communications system highlighting an ePDCCH according to example embodiments described herein;
Figure 5 illustrates an example structure of a subframe of a 3GPP LTE compliant communications system highlighting an ePDSCH and a PDSCH according to example embodiments described herein;
Figure 6a illustrates an example flow diagram of eNB operations in transmitting an ePDSCH according to example embodiments described herein;
Figured 6b through 6e illustrate example starting point signaling according to example embodiments described herein;
Figure 7a illustrates an example flow diagram of UE operations in receiving an ePDSCH according to example embodiments described herein;
Figure 7b through 7e illustrate example starting point determining according to example embodiments described herein;
Figure 8 illustrates an example diagram of a first communications device according to example embodiments described herein; and
Figure 9 illustrates an example diagram of a second communications device according to example embodiments described herein.

### DETAILED DESCRIPTION OF ILLUSTRATIVE EMBODIMENTS

The operating of the current example embodiments and the structure thereof are discussed in detail below. It should be appreciated, however, that the present disclosure provides many applicable inventive concepts that can be embodied in a wide variety of specific contexts. The specific embodiments discussed are merely illustrative of specific structures of the disclosure and ways to operate the disclosure, and do not limit the scope of the disclosure.

One embodiment of the disclosure relates to data channel transmission and reception. For example, at a communications controller, the communications controller allocates a number of resource blocks to an enhanced physical downlink shared channel (ePDSCH), and identifies a starting point for the resource blocks of the ePDSCH, the starting point located within a control region of a subframe. The communications controller also signals to a user equipment (UE) the starting point of the resource blocks and the number of resource blocks allocated to the ePDSCH. As another example, at a UE, the UE decodes an enhanced physical downlink control channel to obtain a number of resource blocks allocated to an enhanced physical shared channel (ePDSCH), and determines a starting point for the ePDSCH, the starting point located in a control region of a subframe. The UE also receives the ePDSCH in accordance with the starting point and the number of resource blocks allocated to the ePDSCH.

The present disclosure will be described with respect to example embodiments in a specific context, namely a communications system that is compliant to 3GPP LTE Rel-10 and later with support for the ePDCCH. The disclosure may also be applied, however, to other standards compliant and non-standards compliant communications systems that allow non-control data to be transmitted in a control portion of a subframe.

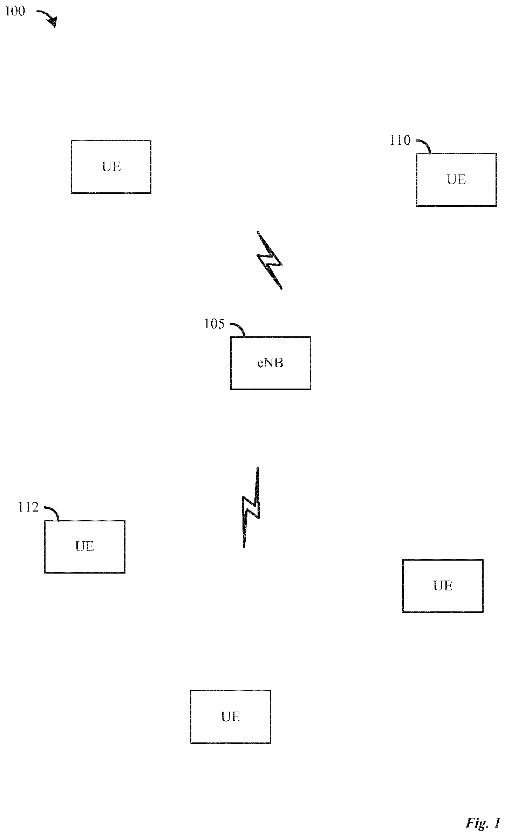

Figure 1 illustrates a communications system 100. Communications system 100 includes an evolved Node B (eNB) 105 serving a plurality of UEs, such as UE 110 and UE 112. eNBs may also be commonly referred to as base stations, NodeB, communications controllers, controllers, base transceiver stations, access points, and the like.

eNB 105 controls communications to and from the UEs that it serves by scheduling resource grants to the UEs individually. As an example, eNB 105 may grant one or more resources to UE 110 for use in a downlink transmission, inform UE 110 of the granted resources, and then transmit data to UE 110. Similarly, eNB 105 may grant one or more resources to UE 112 for use in an uplink transmission, inform UE 112 of the granted resources, and then expect to receive an uplink transmission from UE 112 in the granted resources. The resources may be time resources, frequency resources, or a combination of time-frequency resources.

While it is understood that communications systems may employ multiple eNBs capable of communicating with a number of UEs, only one eNB, and five UEs are illustrated for simplicity.

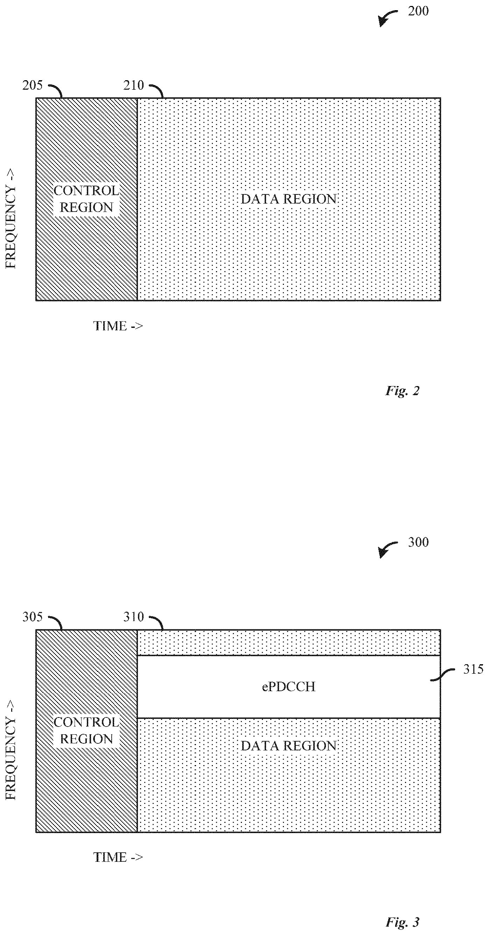

Figure 2 illustrates a structure of a subframe 200 of a 3GPP LTE compliant communications system. Subframe 200 includes a control region 205 and a data region 210.

Generally, control region 205 is used to communicate control information and data region 210 is used to communicate data. A control region may also be referred to as a control domain, while a data region may also be referred to as a data domain. A PDCCH is located in control region 205, usually in the first several symbols (e.g., one to four symbols) of subframe 200. A physical downlink shared channel (PDSCH) is located in data region 210 and is used to transmit data to UEs.

Other control channels, such as a physical hybrid indicator channel (PHICH), which is used to transmit acknowledgements/negative acknowledgements (ACK/NACK) in response to uplink data transmissions, physical control format indicator channel (PCFICH), which is used to indicate a number of symbols of control region 205 of subframe 200, for example, are located in control region 205. The PDDCH, PHICH, and the PCFICH are all located in control region 205.

Control region 205 comprises one or more control channel elements (CCEs). There is a mapping procedure for assigning the resource elements that comprise each CCE to both a time location and a frequency location within control region 205. A CCE may be use noncontiguous resources to exploit frequency diversity. A particular PDCCH may occupy 1, 2, 4, or 8 consecutive CCEs. A UE uses search space rules to identify possible CCEs that contain resource assignments (i.e., a PDCCH) for it. The search space rules may have provisions for a common search space.

In 3GPP LTE Rel-11, there is a proposal for another control channel to, amongst other things, assign resource grants to 3GPP LTE Rel-11 compliant UEs. The new control channel is referred to as an ePDCCH and is intended to be at least frequency-domain multiplexed (FDM) with an LTE subframe. Furthermore, the ePDCCH may also be time-domain multiplexed (TDM) or code-domain multiplexed (CDM) with other channels such as data channels. For simplicity, and without loss of generality, the discussion presented herein is made using FDM. It is noted that adding TDM and/or CDM components is straightforward.

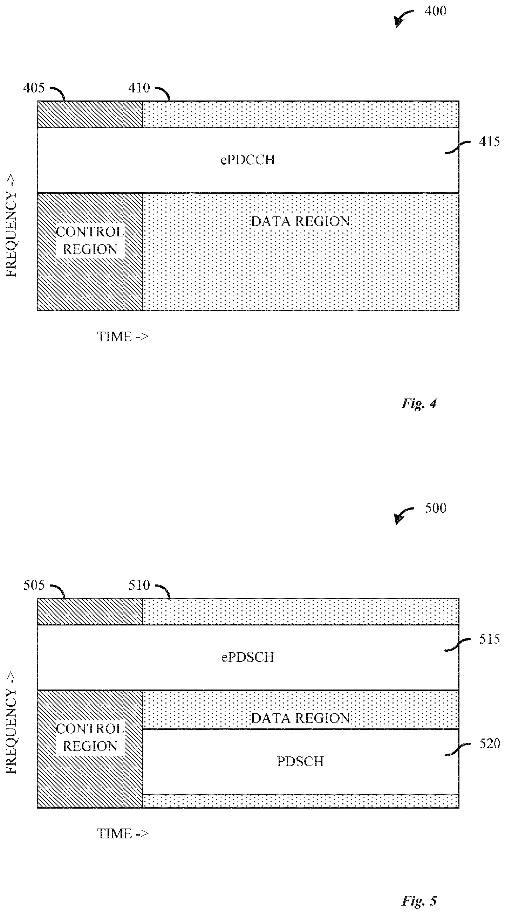

Figure 3 illustrates a structure of a first subframe 300 of a 3GPP LTE compliant communications system highlighting an ePDCCH. As shown in Figure 3, subframe 300 includes a control region 305 and a data region 310. An ePDCCH 315 is located in data region 310. Figure 4 illustrates a structure of a second subframe 400 of a 3GPP LTE compliant communications system highlighting an ePDCCH. As shown in Figure 4, subframe 400 includes a control region 405 and a data region 410. An ePDCCH 415 is located in control region 405 and data region 410. It is noted that the representations of subframes 300 and 400 shown in Figures 3 and 4 are logical domain representations and that the ePDCCHs may occupy non-contiguous frequency resources.

There may be several scenarios where it may be desirable for the ePDCCH to occupy both a control region and a data region. In a first scenario, multiple remote radio heads (RRH) may be used with the same cell identifier, cell ID. In such a case, several RRHs transmit in the same cell. One of the RRH (e.g., a macro-cell) may transmit a PDCCH, and another RRH (e.g., a pico-cell) may transmit an ePDCCH. If the UE for which the ePDCCH is intended is far from the RRH transmitting the PDCCH, the ePDCCH may start in the control region (e.g., at symbol #0). The UE may then be able to decode it, as long as the interference created by the PDCCH is sufficiently low.

In a second scenario, there may be no PDCCH transmission. If the eNB does not transmit any PDCCH (for instance, if there is no rel-10 or earlier UE scheduled), then the control region may only contain the PCFICH, the PHICH, and reference signals. In such a case, the control region may be sparsely occupied, and it may be possible to start the ePDCCH transmission for rel-11 UEs in the control region (e.g., at symbol #0). It is noted that there may be other scenarios where it may be desirable to have the ePDCCH occupy both a control region and a data region, such as when there are few CCEs occupied by a PDCCH transmission in the control region, and the like.

It may be advantageous for compatible UEs to start PDSCH transmission in a control region as well. As an example, when there is no PDCCH transmission in the control region, there are plenty of resource blocks (RBs) with no resource elements used for transmitting the control channel. It is noted that RBs are the basic resource unit of 3GPP LTE. A RB comprises a plurality of resource elements (a symbol-subcarrier unit) and may be allocated to carry information and/or data. With RBs with no resource elements used for transmitting the control channel, the PDSCH transmission may start in the control region. In the discussion presented below, a PDSCH that starts in the control region is referred to as an ePDSCH to help prevent confusion. The terminology PDSCH will be used for Rel-10 compliant PDSCH only.

Figure 5 illustrates a structure of a subframe 500 of a 3GPP LTE compliant communications system highlighting an ePDSCH and a PDSCH. Subframe 500 includes a control region 505 and a data region 510. As shown in Figure 5, subframe 500 includes an ePDSCH 515 that is located in both control region 505 and data region 510 and a PDSCH 520 that is located only in data region 510. ePDSCH 515 may start at a variety of symbols in control region 505, e.g., symbol 0, 1, 2, or 3. However, in Figure 5, ePDSCH 515 is shown as starting at symbol 0 to maximize data content.

A starting point of PDSCH 520 may be indicated by an indicator in the PCFICH that specifies a number of symbols occupied by control region 505. PDSCH 520 (and data region 510) may then start at the next symbol. As an example, if control region 505 occupies 2 symbols (symbols 0, and 1), then PDSCH 520 may start at the 3rd symbol, symbol 2.

According to an example embodiment, a starting symbol (or starting point) of an ePDSCH may differ. As an example, the starting symbol for ePDSCHs may be the same for all UEs. According to the invention, the starting symbol for ePDSCHs is be UE dependent, differing for different UEs. An ePDSCH with a varying starting symbol allows, according to the claimed invention, for avoidance of interference from control channels, such as PDCCH, from other cells. Since the level of interference varies with UE location, the starting point of an ePDSCH may differ between different UEs, depending on the level of interference seen from control channels of neighboring cells.

In a situation when the starting point of ePDSCHs is the same for all UEs, there are several techniques that may be used to indicate to the UEs the starting point. A first technique sets the starting point at a particular symbol, such as symbol 0. Fixing the starting point eliminates the need for signaling the starting point, therefore ensuring maximum resource utilization. However, no flexibility is provided to combat interference from control channels from neighboring cells.

A second technique uses an indicator in the PCFICH to indicate the starting point of the ePDSCH. In 3GPP LTE Rel-10, there are three possible values for the number of symbols occupied by the control region: 1, 2, 3 or 2, 3, 4 depending on bandwidth. Three possible values require the use of a two-bit indicator, which provides for up to four possible values. Therefore, one value is unused. The fourth value may then be used to indicate the starting point of the ePDSCH. As an example, the presence of the fourth value indicates that the starting point of the ePDSCH is at symbol 0.

As an illustrative example, when the bits of the indicator in the PCFICH are remapped, the following rule may be used to remap the 4 possible values, since only 3 of the 4 are needed (1, 2, 3 when the bandwidth is greater than 10 RBs, 2, 3, 4 when the bandwidth is smaller than or equal to 10 RBs):
1) 1, 2, 3, 4 to 1, 2, 3, 0, respectively, when bandwidth is greater than 10 RBs;
   and
2) 1, 2, 3, 4 to 0, 2, 3, 4, respectively, when bandwidth is smaller or equal to 10 RBs. An example of mapping function for 1) is f=(indicator) modulo 4. An example of mapping function for 2) is f=floor((5*indicator-2)/4). Therefore, if the UE receives the indicator and it is equal to 0, then the UE knows that the starting point of the ePDSCH is at symbol 0.

A third technique uses a radio resource control (RRC) parameter, e.g., *pdsch-start,* to indicate the starting point of the ePDSCH. In 3GPP LTE Rel-10, an RRC parameter, e.g*., pdsch-start,* is used to indicate the number of symbols occupied by the control region: 1, 2, 3 or 2, 3, 4 depending on bandwidth. The three possible values require the use of a two-bit RRC parameter, which provides for up to four possible values. Therefore, one value is unused. The fourth value may then be used to indicate the starting point of the ePDSCH. As an example, the presence of the fourth value indicates that the starting point of the ePDSCH is at symbol 0.

As an illustrative example, when the bits of the RRC parameter are remapped, the following rule may be used to remap the 4 possible values, since only 3 of the 4 are needed (1, 2, 3 when the bandwidth is greater than 10 RBs, 2, 3, 4 when the bandwidth is smaller than or equal to 10 RBs):
i) 1, 2, 3, 4 to 1, 2, 3, 0, respectively, when bandwidth is greater than 10 RBs; and
ii) 1, 2, 3, 4 to 0, 2, 3, 4, respectively, when bandwidth is smaller or equal to 10 RBs. An example of mapping function for i) is f=(pdsch-start) modulo 4. An example of mapping function for ii) is f=floor((5*pdsch-start-2)/4). Therefore, if the UE receives the RRC parameter and it is equal to zero, then the UE knows that the starting point of the ePDSCH is at symbol 0.

A fourth technique places an indicator of the starting point of the ePDSCH in a common search space of a control channel, e.g., a PDCCH or an ePDCCH. In general, a search space comprises a group of resources that a UE searches to find a control channel, e.g., a PDCCH or an ePDCCH, intended for it. The indicator of the starting point of the ePDSCH may also be located in the search space of the control channel so that the UE will find the indicator as it searches for the control channel. It is noted that the indicator may be a multi-bit value to indicate multiple possible starting points for the ePDSCH.

In a situation when the starting point of ePDSCHs are UE specific, there are several techniques that may be used to indicate the starting point of the ePDSCHs to the UEs. A first technique uses an indicator that is part of a resource grant to the UE. As an example, the indicator of the starting point of ePDSCHs for a particular UE is included in a resource grant sent to the UE. The use of a resource grant may require the use of a new field in the DCI format to indicate the starting symbol of the ePDSCH. As an example, a two-bit field coded similarly as the pdsch-start RRC parameter discussed above may be used.

A second technique uses a radio resource control (RRC) parameter, e.g., *pdsch-start,* to indicate the starting point of the ePDSCH. In 3GPP LTE Rel-10, an RRC parameter, e.g., *pdsch-start,* is used to indicate the number of symbols occupied by the control region: 1, 2, 3 or 2, 3, 4 depending on bandwidth. The three possible values require the use of a two-bit RRC parameter, which provides for up to four possible values. Therefore, one value is unused. The fourth value may then be used to indicate the starting point of the ePDSCH. As an example, the presence of the fourth value indicates that the starting point of the ePDSCH is at symbol 0. The illustrative example of the use of the RRC parameter for the case with the same starting point for all UEs also applies to this technique.

A third technique places an indicator of the starting point of the ePDSCH in a common search space of a control channel, e.g., a PDCCH or an ePDCCH. In general, a search space comprises a group of resources that a UE searches to find a control channel, e.g., a PDCCH or an ePDCCH, intended for it. The indicator of the starting point of the ePDSCH may also be located in the search space of the control channel so that the UE will find the indicator as it searches for the control channel. It is noted that the indicator may be a multi-bit value to indicate multiple possible starting points for the ePDSCH.

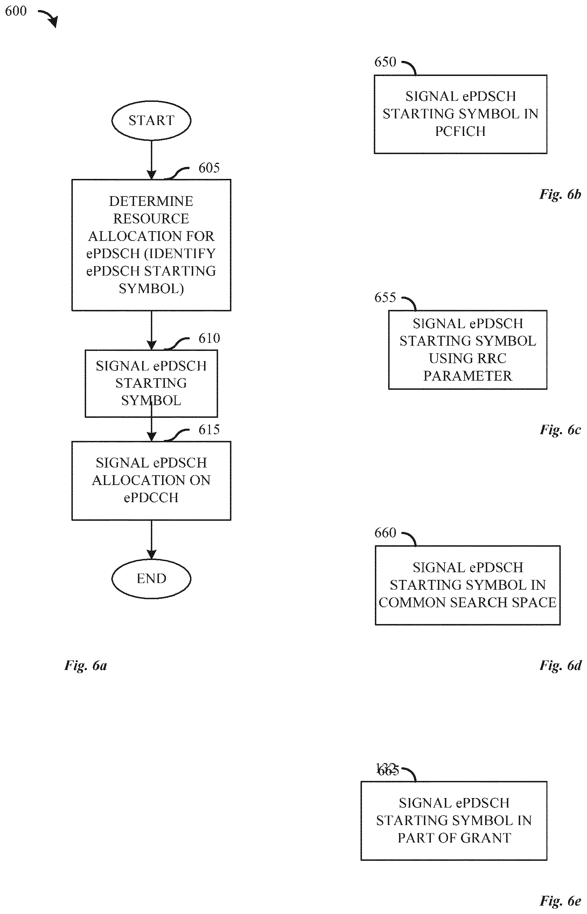

Figure 6a illustrates a flow diagram of eNB operations 600 in transmitting an ePDSCH. eNB operations 600 may be indicative of operations occurring in an eNB, such as eNB 105, as the eNB transmits an ePDSCH to a UE, such as UE 110 and UE 112.

eNB operations 600 may begin with the eNB determining a resource allocation for the ePDSCH that it is transmitting to the UE (block 605). The resource allocation may include which RBs are to be occupied by the ePDSCH and a starting point (e.g., a starting symbol) for the ePDSCH. The resource allocation may also include other information, such as ePDSCH ending point (e.g., an ending symbol), ePDSCH resource element (RE) and/or antenna port mapping, and the like. In general, the starting point of an ePDSCH lies within a control region of a subframe.

The eNB may signal the starting point (e.g., the starting symbol) for the ePDSCH (block 610). As discussed previously, the eNB may use an unused state of an indicator in the PCFICH to indicate the starting point for the ePDSCH (shown as block 650 of Figure 6b). Also discussed previously, the eNB may use an unused state of a RRC parameter to indicate the starting point of the ePDSCH (shown as block 655 of Figure 6c). Also discussed previously, the eNB may use an indicator located in a common search space of a control channel, such as a PDCCH or ePDCCH, to indicate the starting point of the ePDSCH (shown as block 660 of Figure 6d). Also discussed previously, the eNB may use an indicator that is part of a resource grant for the ePDSCH sent to the UE to indicate the starting point of the ePDSCH (shown as block 665 of Figure 6e). It is noted that if the starting point of the ePDSCH is always fixed, e.g., at symbol 0, then the eNB may not need to signal the starting point for the ePDSCH.

It is noted that the signaling of the starting point of the ePDSCH need not occur for each ePDSCH. As an example, if the RRC parameter is used, a previously received ePDSCH starting point may be assumed to be valid until a new RRC parameter is received.

Referencing back to Figure 6a, the eNB may signal the ePDSCH allocation, e.g., the RBs to be occupied by the ePDSCH, ePDSCH ending point, ePDSCH RE and/or antenna port mapping, and the like, to the UE (block 615). The ePDSCH allocation may be signaled on an ePDCCH that corresponds to the ePDSCH. Existing, modified, or new downlink control indicator (DCI) format(s) may be used. It is noted that the signaling of the ePDSCH starting point and the ePDSCH allocation may be transmitted in a single message, such as in a message with a modified or new DCI format.

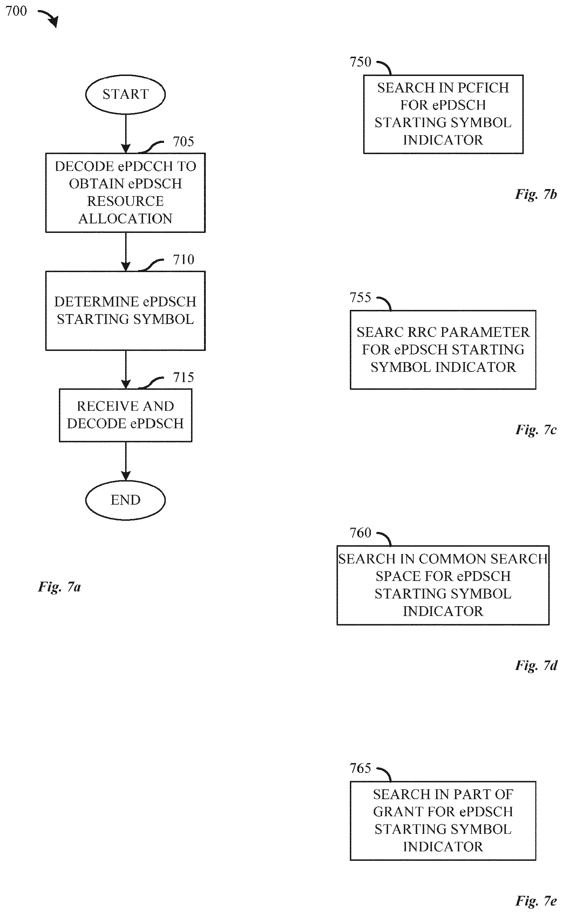

Figure 7a illustrates a flow diagram of UE operations 700 in receiving an ePDSCH. UE operations 700 may be indicative of operations occurring in a UE, such as UE 110 and UE 112, as the UE receives an ePDSCH from an eNB, such as eNB 105.

UE operations 700 may begin with the UE decoding an ePDCCH to obtain its ePDSCH allocation (block 705). The ePDSCH allocation may include which RBs are to be occupied by the ePDSCH. The resource allocation may also include other information, such as ePDSCH ending point (e.g., an ending symbol), ePDSCH range extension (RE) and/or antenna port mapping, and the like.

The UE may determine a starting point (e.g., a starting symbol) of the ePDSCH (block 710). In general, the starting point of an ePDSCH lies within a control region of a subframe. As discussed previously, an unused state of an indicator in the PCFICH may be used to indicate the starting point for the ePDSCH, so the UE may search in the PCFICH to find the indicator and determine the starting point (shown as block 750 of Figure 7b). Also discussed previously, an unused state of a RRC parameter may be used to indicate the starting point of the ePDSCH, so the UE may search for the RRC parameter to determine the starting point (shown as block 755 of Figure 7c). Also discussed previously, an indicator located in a common search space of a control channel, such as a PDCCH or ePDCCH, may be used to indicate the starting point of the ePDSCH, so the UE may search in the common search space of either the PDCCH or the ePDCCH to determine the starting point (shown as block 760 of Figure 7d). Also discussed previously, an indicator that is part of a resource grant for the ePDSCH sent to the UE may be used to indicate the starting point of the ePDSCH, so the UE may search in the resource grant for the indicator to determine the starting point (shown as block 765 of Figure 7e). It is noted that if the starting point of the ePDSCH is always fixed, e.g., at symbol 0, then the UE may not need to determine the starting point for the ePDSCH.

It is noted that the signaling of the starting point of the ePDSCH need not occur for each ePDSCH. If the UE does not find a new indicator of the starting point of the ePDSCH, it may assume that a previously received ePDSCH starting point and use that starting point until it receives a new indicator of the starting point of the ePDSCH. It is also noted that the signaling of the ePDSCH starting point and the ePDSCH allocation may be received in a single message, such as in a message with a modified or new DCI format.

Referencing back now to Figure 7a, the UE may receive and decode the ePDSCH using the starting point and the ePDSCH allocation (block 715).

Since the control region may not be fully unoccupied, a situation may arise where some REs may be allocated to multiple channels, such as to both an ePDSCH and the PCFICH. In such a situation, the REs used by the PCFICH (or any other channel, such as the PHICH and the like) are not considered as being occupied by the ePDSCH. The UE may not assume that the REs where the PCFICH is present are used by the ePDSCH, and the eNB may not transmit any bits conveyed on the ePDSCH on a RE occupied by the PCFICH. It is noted that there is no ambiguity for the UE since the UE knows where the PCFICH (or any other channel, such as the PHICH and the like) is located. It is also noted that if an ePDCCH is mapped onto resources where a PCFICH or PHICH is presented, similar rules may apply.

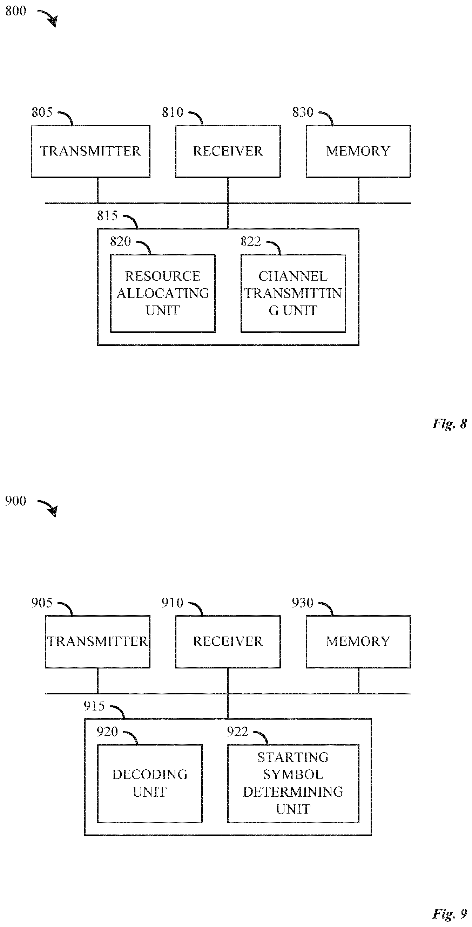

Figure 8 illustrates a diagram of a first communications device 800. Communications device 800 may be an implementation of a communications controller, such as a eNB, of a communications system. Communications device 800 may be used to implement various ones of the embodiments discussed herein. As shown in Figure 8, a transmitter 805 is configured to send control channels, indicators, messages, and the like, and a receiver 810 is configured to receive messages, and the like. Transmitter 805 and receiver 810 may have a wireless interface, a wireline interface, or a combination thereof.

A resource allocating unit 820 is configured to allocate resources for a control channel, such as an ePDSCH. Resource allocating unit 820 may allocate which RBs are to be occupied by the control channel and a starting point (e.g., a starting symbol) for the control channel. The resource allocation may also include other information, such as control channel ending point (e.g., an ending symbol), control channel resource element (RE) and/or antenna port mapping, and the like. A channel transmitting unit 822 is configured to transmit (or signal) information, such as resource allocation information about the control channel. Channel transmitting unit 822 may transmit the resource allocation using a single message or multiple messages. As an example, channel transmitting unit 822 may separately transmit the starting point of the control channel and the remainder of the resource allocation. As another example, channel transmitting unit 822 may transmit the starting point of the control channel and the remainder of the resource allocation in a single message. A memory 830 is configured to store control channels, resource allocations for the control channels, messages, and the like.

The elements of communications device 800 may be implemented as specific hardware logic blocks. In an alternative, the elements of communications device 800 may be implemented as software executing in a processor, controller, application specific integrated circuit, or so on. In yet another alternative, the elements of communications device 800 may be implemented as a combination of software and/or hardware.

As an example, transmitter 805 and receiver 810 may be implemented as a specific hardware block, while resource allocating unit 820 and channel transmitting unit 822 may be software modules executing in a processor 815, such as a microprocessor, a digital signal processor, a custom circuit, or a custom compiled logic array of a field programmable logic array. Additionally, resource allocating unit 820 and channel transmitting unit 822 may be stored in memory 830.

Figure 9 illustrates a diagram of a second communications device 900. Communications device 900 may be an implementation of a communications device, such as a UE, of a communications system. Communications device 900 may be used to implement various ones of the embodiments discussed herein. As shown in Figure 9, a transmitter 905 is configured to send messages, and the like, and a receiver 910 is configured to receive control channels, indicators, messages, and the like. Transmitter 905 and receiver 910 may have a wireless interface, a wireline interface, or a combination thereof.

A decoding unit 920 is configured to decode a transmission. Decoding unit 920 decodes information located in resources associated with the transmission in accordance with a known modulation and coding scheme. As an example, decoding unit 920 decodes information located in resources associated with an ePDCCH to obtain a resource allocation for an ePDSCH. A starting symbol determining unit 922 is configured to determine a starting point, e.g., a starting symbol, of a control channel, such as an ePDSCH. Depending on a signaling technique used by a communications controller serving communications device 900, starting symbol determining unit 922 may determine the starting point of the control channel by searching in a PCFICH for an indicator of the starting point, searching for an RRC parameter for an indicator of the starting point, searching in a common search space of a control channel (such as a PDCCH or an ePDCCH) for an indicator of the starting point, searching in a resource grant of the ePDSCH for an indicator of the starting point, and the like. A memory 930 is configured to store control channels, resource allocations for the control channels, starting points, messages, and the like.

The elements of communications device 900 may be implemented as specific hardware logic blocks. In an alternative, the elements of communications device 900 may be implemented as software executing in a processor, controller, application specific integrated circuit, or so on. In yet another alternative, the elements of communications device 900 may be implemented as a combination of software and/or hardware.

As an example, transmitter 905 and receiver 910 may be implemented as a specific hardware block, while decoding unit 920 and starting symbol determining unit 922 may be software modules executing in a processor 915, such as a microprocessor, a digital signal processor, a custom circuit, or a custom compiled logic array of a field programmable logic array. Additionally, decoding unit 920 and starting symbol determining unit 922 may be stored in memory 930.

Although the present disclosure and its advantages have been described in detail, it should be understood that various changes, substitutions and alterations can be made herein without departing from the scope of the disclosure. The invention is defined by the appended claims.

## Claims

1. A method performed by a base station of a cell, the method comprising:
• allocating a first number of resource blocks within a control region in a subframe to transmit control information to a user equipment, UE, and allocating a second number of resource blocks of the subframe to an enhanced physical downlink shared channel, ePDSCH, established between the base station and the UE, wherein the ePDSCH is a PDSCH that starts in the control region;
• determining (605) a position of a starting symbol for the second number of resource blocks of the ePDSCH within the subframe based on a level of interference of the ePDSCH, the interference of the ePDSCH being caused by control channels of neighboring cells neighboring the cell, wherein the starting symbol is located within the control region (505) of the subframe; and
• signaling (610,615) to the UE an indicator of the position of the starting symbol of the second number of resource blocks and the second number of resource blocks allocated to the ePDSCH.

2. The method of claim 1, further comprising signaling (650) the indicator in a physical control format indicator channel, PCFICH or signaling the indicator as a radio resource control parameter; or signaling (660) the indicator in a common search space of a control channel between the UE and the base station; or signaling (665) the indicator in a grant of the ePDSCH.

3. The method of claim 2, wherein the radio resource control parameter is a pdsch-start parameter.

4. The method of claim 2, wherein the control channel comprises one of a physical downlink control channel and an enhanced physical downlink control channel.

5. The method of claim 1, further comprising signaling the number of resource blocks allocated to the ePDSCH on an enhanced physical downlink control channel between the UE and the base station.

6. A method performed by a user equipment, UE, the method comprising:
• receiving, from a base station of a cell an indicator of a position of a starting symbol of resource blocks allocated to an enhanced physical downlink shared channel, ePDSCH, within a subframe, and a second number of resource blocks within the subframe allocated to the ePDSCH, wherein the ePDSCH is a PDSCH established between the UE and the base station that starts in a control region of the subframe, wherein the control region is a region in the subframe in which a first number of resource blocks is allocated to transmit control information to the UE,
• determining (710) a position of the starting symbol for the ePDSCH based on the indicator, wherein the starting symbol is located in the control region (505) of the subframe, and the position is dependent on a level of interference of the ePDSCH, the interference of the ePDSCH being caused by control channels of neighboring cells neighboring the cell,
• receiving (715) and decoding (715) the ePDSCH in accordance with the starting symbol and the second number of resource blocks allocated to the ePDSCH.

7. The method of claim 6, wherein the reception of the indicator comprises: receiving the indicator in a physical control format indicator channel, PCFICH, from the base station; and the determining of the position of the starting symbol comprises: setting the position of the starting symbol in accordance to the indicator.

8. The method of claim 6, wherein the reception of the indicator comprises: receiving a radio resource control message with a radio resource control parameter as the indicator; and the determining of the position of the starting symbol comprises: setting the position of the starting symbol in accordance with the radio resource control parameter.

9. The method of claim 6, wherein the reception of the indicator comprises: searching for the indicator in a common search space of a control channel between the base station and the UE; and the determining of the position of the starting symbol comprises: setting the position of the starting symbol in accordance with the indicator.

10. The method of claim 9, wherein the control channel comprises one of a physical downlink control channel and an enhanced physical downlink control channel.

11. The method of claim 6, wherein the reception of the indicator comprises: receiving a grant for the ePDSCH, the grant including the indicator; and the determining of the position of the starting symbol comprises: setting the position of the starting symbol in accordance with the indicator.

12. A base station (800) comprising means configured to implement a method in accordance with any one of claims 1 to 5.

13. A user equipment, UE, (900) comprising means configured to implement a method in accordance with any one of claims 6 to 11.

## Patentansprüche

1. Verfahren, ausgeführt von einer Basisstation einer Zelle, wobei das Verfahren Folgendes umfasst:
▪ Zuweisen einer ersten Anzahl von Ressourcenblöcken in einer Steuerregion in einem Subframe, um Steuerinformationen an eine Benutzerausrüstung, UE, zu übertragen, und Zuweisen einer zweiten Anzahl von Ressourcenblöcken des Subframes an einen ePDSCH, "enhanced Physical Downlink Shared Channel", der zwischen der Basisstation und der UE eingerichtet ist, wobei der ePDSCH ein PDSCH ist, der in der Steuerregion startet,
▪ Bestimmen (605) einer Position eines Startsymbols für die zweite Anzahl von Ressourcenblöcken des ePDSCH in dem Subframe, basierend auf einem Grad der Interferenz des ePDSCH, wobei die Interferenz des ePDSCH durch Steuerkanäle benachbarter Zellen verursacht wird, die zu der Zelle benachbart sind, wobei sich das Startsymbol in der Steuerregion (505) des Subframes befindet, und
▪ Signalisieren (610, 615) eines Indikators der Position des Startsymbols der zweiten Anzahl von Ressourcenblöcken und der zweiten Anzahl von Ressourcenblöcken, die dem ePDSCH zugewiesen sind, an die UE.

2. Verfahren nach Anspruch 1, ferner das Signalisieren (650) des Indikators in einem PCFICH, "Physical Control Format Indicator Channel", oder Signalisieren des Indikators als einen Funkressourcen-Steuerparameter oder Signalisieren (660) des Indikators in einem gemeinsamen Suchraum eines Steuerkanals zwischen der UE und der Basisstation oder Signalisieren (665) des Indikators in einer Zuteilung des ePDSCH.

3. Verfahren nach Anspruch 2, wobei der Funkressourcen-Steuerparameter ein PDSCH-Startparameter ist.

4. Verfahren nach Anspruch 2, wobei der Steuerkanal einen von einem PDCCH, "Physical Downlink Control Channel", und einem ePDCCH, "enhanced Physical Downlink Control Channel", umfasst.

5. Verfahren nach Anspruch 1, ferner das Signalisieren der Anzahl von Ressourcenblöcken, die dem ePDSCH zugewiesen sind, auf einem ePDCCH, "enhanced Physical Downlink Control Channel", zwischen der UE und der Basisstation umfassend.

6. Verfahren, ausgeführt von einer Benutzerausrüstung, UE, wobei das Verfahren Folgendes umfasst:
▪ Empfangen eines Indikators einer Position eines Startsymbols von Ressourcenblöcken, die einem ePDSCH, "enhanced Physical Downlink Shared Channel", in einem Subframe zugewiesen sind, und einer zweiten Anzahl von Ressourcenblöcken in dem Subframe, die dem ePDSCH zugewiesen sind, von einer Basisstation einer Zelle, wobei der ePDSCH ein PDSCH ist, der zwischen der UE und der Basisstation eingerichtet wird, der in einer Steuerregion des Subframes startet, wobei die Steuerregion eine Region des Subframes ist, in der eine erste Anzahl von Ressourcenblöcken zugewiesen wird, um Steuerinformationen an die UE zu übertragen,
▪ Bestimmen (710) einer Position des Startsymbols für den ePDSCH basierend auf dem Indikator, wobei sich das Startsymbol in der Steuerregion (505) des Subframes befindet und die Position von einem Grad der Interferenz des ePDSCH abhängt, wobei die Interferenz des ePDSCH durch Steuerkanäle benachbarter Zellen verursacht wird, die zu der Zelle benachbart sind,
▪ Empfangen (715) und Decodieren (715) des ePDSCH gemäß dem Startsymbol und der zweiten Anzahl von Ressourcenblöcken, die dem ePDSCH zugewiesen sind.

7. Verfahren nach Anspruch 6, wobei der Empfang des Indikators Folgendes umfasst: Empfangen des Indikators in einem PCFICH, "Physical Control Format Indicator Channel", von der Basisstation, und wobei das Bestimmen der Position des Startsymbols Folgendes umfasst: Einstellen der Position des Startsymbols gemäß dem Indikator.

8. Verfahren nach Anspruch 6, wobei der Empfang des Indikators Folgendes umfasst: Empfangen einer Funkressourcen-Steuernachricht mit einem Funkressourcen-Steuerparameter als Indikator, und wobei das Bestimmen der Position des Startsymbols Folgendes umfasst: Einstellen der Position des Startsymbols gemäß dem Funkressourcen-Steuerparameter.

9. Verfahren nach Anspruch 6, wobei der Empfang des Indikators Folgendes umfasst: Suchen des Indikators in einem gemeinsamen Suchraum eines Steuerkanals zwischen der Basisstation und der UE, und wobei das Bestimmen der Position des Startsymbols Folgendes umfasst: Einstellen der Position des Startsymbols gemäß dem Indikator.

10. Verfahren nach Anspruch 9, wobei der Steuerkanal einen von einem PDCCH, "Physical Downlink Control Channel", und einem ePDCCH, "enhanced Physical Downlink Control Channel", umfasst.

11. Verfahren nach Anspruch 6, wobei der Empfang des Indikators Folgendes umfasst: Empfangen einer Zuteilung für den ePDSCH, wobei die Zuteilung den Indikator umfasst, und wobei das Bestimmen der Position des Startsymbols Folgendes umfasst: Einstellen der Position des Startsymbols gemäß dem Indikator.

12. Basisstation (800), Mittel umfassend, die dafür konfiguriert sind, ein Verfahren nach einem der Ansprüche 1 bis 5 zu implementieren.

13. Benutzerausrüstung, UE, (900), Mittel umfassend, die dafür konfiguriert sind, ein Verfahren nach einem der Ansprüche 6 bis 11 zu implementieren.

## Revendications

1. Procédé réalisé par une station de base d'une cellule, le procédé comprenant :
• l'allocation d'un premier nombre de blocs de ressources au sein d'une région de commande dans une sous-trame pour transmettre des informations de commande à un équipement utilisateur, UE, et l'allocation d'un deuxième nombre de blocs de ressources de la sous-trame à un canal physique partagé sur la liaison descendante amélioré, ePDSCH, établi entre la station de base et l'UE, l'ePDSCH étant un PDSCH dont le point de départ se situe dans la région de commande ;
• la détermination (605) d'une position d'un symbole de départ pour le deuxième nombre de blocs de ressources de l'ePDSCH au sein de la sous-trame sur la base d'un niveau d'interférence de l'ePDSCH, l'interférence de l'ePDSCH étant due à des canaux de commande de cellules voisines avoisinant la cellule, le symbole de départ se situant au sein de la région de commande (505) de la sous-trame ; et
• la signalisation (610, 615) à l'UE d'un indicateur de la position du symbole de départ du deuxième nombre de blocs de ressources et du deuxième nombre de blocs de ressources alloué à l'ePDSCH.

2. Procédé selon la revendication 1, comprenant en outre la signalisation (650) de l'indicateur dans un canal physique indicateur de format de commande, PCFICH, ou la signalisation de l'indicateur sous forme d'un paramètre de commande des ressources radio ; ou la signalisation (660) de l'indicateur dans un espace de recherche commun d'un canal de commande entre l'UE et la station de base ; ou la signalisation (665) de l'indicateur dans une attribution de l'ePDSCH.

3. Procédé selon la revendication 2, dans lequel le paramètre de commande des ressources radio est un paramètre de départ de PDSCH.

4. Procédé selon la revendication 2, dans lequel le canal de commande comprend soit un canal physique de commande sur la liaison descendante, soit un canal physique de commande sur la liaison descendante amélioré.

5. Procédé selon la revendication 1, comprenant en outre la signalisation du nombre de blocs de ressources alloué à l'ePDSCH sur un canal physique de commande sur la liaison descendante amélioré entre l'UE et la station de base.

6. Procédé réalisé par un équipement utilisateur, UE, le procédé comprenant :
• la réception, depuis une station de base d'une cellule, d'un indicateur d'une position d'un symbole de départ de blocs de ressources alloués à un canal physique partagé sur la liaison descendante amélioré, ePDSCH, au sein d'une sous-trame et d'un deuxième nombre de blocs de ressources au sein de la sous-trame alloué à l'ePDSCH, l'ePDSCH étant un PDSCH établi entre l'UE et la station de base dont le point de départ se situe dans une région de commande de la sous-trame, la région de commande étant une région dans la sous-trame dans laquelle un premier nombre de blocs de ressources est alloué pour transmettre des informations de commande à l'UE,
• la détermination (710) d'une position du symbole de départ pour l'ePDSCH sur la base de l'indicateur, le symbole de départ se situant dans la région de commande (505) de la sous-trame, et la position étant fonction d'un niveau d'interférence de l'ePDSCH, l'interférence de l'ePDSCH étant due à des canaux de commandes de cellules voisines avoisinant la cellule,
• la réception (715) et le décodage (715) de l'ePDSCH conformément au symbole de départ et au deuxième nombre de blocs de ressources alloué à l'ePDSCH.

7. Procédé selon la revendication 6, dans lequel la réception de l'indicateur comprend : la réception de l'indicateur dans un canal physique indicateur de format de commande, PCFICH, en provenance de la station de base ; et la détermination de la position du symbole de départ comprend : la définition de la position du symbole de départ conformément à l'indicateur.

8. Procédé selon la revendication 6, dans lequel la réception de l'indicateur comprend : la réception d'un message de commande des ressources radio avec un paramètre de commande des ressources radio comme indicateur ; et la détermination de la position du symbole de départ comprend : la définition de la position du symbole de départ conformément au paramètre de commande des ressources radio.

9. Procédé selon la revendication 6, dans lequel la réception de l'indicateur comprend : la recherche de l'indicateur dans un espace de recherche commun d'un canal de commande entre la station de base et l'UE ; et la détermination de la position du symbole de départ comprend : la définition de la position du symbole de départ conformément à l'indicateur.

10. Procédé selon la revendication 9, dans lequel le canal de commande comprend soit un canal physique de commande sur la liaison descendante, soit un canal physique de commande sur la liaison descendante amélioré.

11. Procédé selon la revendication 6, dans lequel la réception de l'indicateur comprend :
la réception d'une attribution pour l'ePDSCH, l'attribution comportant l'indicateur ; et
la détermination de la position du symbole de départ comprend :
la définition de la position du symbole de départ conformément à l'indicateur.

12. Station de base (800) comprenant des moyens configurés pour mettre en oeuvre un procédé selon l'une quelconque des revendications 1 à 5.

13. Équipement utilisateur, UE, (900) comprenant des moyens configurés pour mettre en oeuvre un procédé selon l'une quelconque des revendications 6 à 11.
